# EUROPÄISCHE PATENTANMELDUNG

(11) **EP 0 915 126 A2**
(43) Veröffentlichungstag der Anmeldung: **12.05.1999**
(21) Anmeldenummer: 98119456.6
(22) Anmeldetag: 15.10.1998
(51) Int. Cl.: C08J 9/00, C08J 9/16, C08F 257/02

(54) **Verfahren zur Herstellung von perlformigen expandierbaren Styrolpolymerisaten**

(30) Priorität: 10.11.1997 DE 19749570
(71) Anmelder: BASF AKTIENGESELLSCHAFT, 67056 Ludwigshafen (DE)
(72) Erfinder: Glück, Guiscard Dr., 55129 Mainz (DE); Hahn, Klaus Dr., 67281 Kirchheim (DE); Löffler, Achim Dr., 76137 Karlsruhe (DE); Lorenz, Maria Dr., 67281 Kirchheim (DE)

(57) **Zusammenfassung**

Die Erfindung betrifft ein Verfahren zur Herstellung von Graphitpartikel enthaltenden expandierbaren Styrolpolymerisaten durch Polymerisation von Styrol in wässriger Suspension in Gegenwart von zwei, bei unterschiedlichen Temperaturen zerfallenden Peroxiden, wobei das bei niedrigerer Temperatur zerfallende Peroxid multifunktionell ist und beim Zerfall zwei oder mehrere zusammenhängende Polymerketten bildet.

## Beschreibung

Die Erfindung betrifft ein verbessertes Verfahren zur Herstellung expandierbarer Styrolpolymerisate (EPS).

Die Suspensionspolymerisation von Styrol zur Herstellung von EPS wird gewöhnlich als diskontinuierlicher Prozeß mit einem ansteigendem Temperaturorofil durchgeführt. Als Polymerisationsinitiatoren werden Peroxide mit unterschiedlichen Halbwertszeiten verwendet. Gewöhnlich verwendet man Dibenzoylperoxid während der ersten Stufe der Polymerisation bei circa 80 bis 90°C, sowie ein höher zerfallendes Peroxid wie tert.-Butylperbenzoat oder Dicumylperoxid während der zweiten Stufe der Polymerisation bei circa 105 bis 130°C. Mit dieser Verfahrensweise ist man in der Lage, EPS mit geringen Restmonomergehalten zu erzielen. Die Verwendung von Peroxiden mit unterschiedlichen Halbwertszeiten in Abhängigkeit von der Temperatur gestattet eine kontrollierte Abfuhr der Reaktionswärme über den gesamten Prozeß. Dies ist insbesondere wichtig für große Reaktionsgefäße, wie sie in der industriellen Produktion zur Anwendung kommen, welche über ein ungünstiges Volumen/Oberflächen-Verhältnis zur Wärmeabfuhr verfügen.

Durch die molare Menge an Peroxiden in der Reaktionsmischung läßt sich die Anzahl der Reaktionszentren und demnach proportional auch der Umsatz steuern. Allerdings ist eine einfache Erhöhung der Konzentration an herkömmlichen monofunktionellen Peroxiden (z.B. Dibenzoylperoxid) zur Erzielung eines erhöhten Umsatzes nicht ohne weitreichende Folgen möglich. Zwangsläufig würden während der Reaktion mehr Polymerketten entstehen, was zu vergleichbar niedrigen Viskositäten des auspolymerisierten Produktes führen würde. Von solchen Produkten ist jedoch bekannt, daß weder Verarbeitungseigenschaften (z. B. Verklebung) noch die Eigenschaften der daraus hergestellten Schaumstoffe (geringe mechanische Belastbarkeit) akzeptabel sind.

Der Erfindung lag daher die Aufgabe zugrunde, bei der Suspensionspolymerisation zur Herstellung von EPS den Umsatz zu erhöhen, ohne daß dies zu einer Verschlechterung der Eigenschaften führt.

Diese Aufgabe wird erfindungsgemäß dadurch gelöst, daß als Peroxid A, das bei der niedrigeren Temperatur zerfällt, ein multifunktionelles Peroxid eingesetzt wird.

Gegenstand der Erfindung ist ein Verfahren zur Herstellung von expandierbaren Styrolpolymerisaten, bei dem man Styrol, gegebenenfalls zusammen mit bis zu 20 % seines Gewichts an Comonomeren, in wäßriger Suspension in Gegenwart von mindestens zwei, bei verschiedenen Temperaturen zerfallenden organischen Peroxiden A und B polymerisiert, wobei das Peroxid A eine Halbwertszeit von 1 Stunde bei 80°C bis 100°C, und das Peroxid B eine Halbwertszeit von 1 Stunde bei 110°C bis 150°C aufweist. Das Verfahren ist dadurch gekennzeichnet, daß das bei niedrigerer Temperatur zerfallende Peroxid A multifunktionell ist und beim Zerfall zwei oder mehr zusammenhängende Polymerketten startet, und daß das Molverhältnis der Peroxide B:A größer als 40:60 ist.

Mit diesen multifunktionellen Peroxiden könnte man - im Vergleich zu einer Polymerisation mit monofunktionellen Peroxiden - Polymere mit einem höheren Molekulargewicht herstellen, wenn man die gleiche molare Menge an Initiator einsetzen würde. Andererseits gelingt es aber, durch Erhöhung der Konzentration an multifunktionellen Peroxiden den Umsatz bei der Polymerisation zu steigern und damit den Polymerisationszyklus zu verkürzen, ohne daß das Molekulargewicht des Polymeren verringert und damit die Produkteigenschaften verschlechtert werden.

In der EP-A 574 665 ist eine Initiator-Kombination beschrieben aus A. Dibenzoylperoxid, welches bei 80 - 90°C zerfällt, und B. bifunktionellen Perketalen, z. B. 2,2-Bis(tert.butylperoxy)butan und 2,2-Bis(tert.butylperoxy)cyclohexan, die bei 105 bis 130° zerfallen. Mit einer derartigen Initiatorkombination lassen sich aber die oben beschriebenen Effekte nicht erzielen.

Die JP-A 61-171705 beschreibt ein Verfahren zur Herstellung von EPS durch Polymerisation von Styrol in Gegenwart von Ruß, wobei als Initiator ein Benzolring-freies, bifunktionelles Peroxid eingesetzt wird. Während bei Verwendung herkömmlicher Peroxide die Polymerisation von Styrol durch Rußpartikel inhibiert wird, wodurch die Polymerisationsdauer stark verlängert wird, soll dies bei dem Benzolring-freiem, bifunktionellen Peroxiden nicht der Fall sein. Nach der JP-A 61-171705 können bis zu 20 Gew.-% des bifunktionellen Peroxids durch ein monofunktionelles Peroxid ersetzt sein, welches eine Halbwertzeit von 10 Stunden bei 100 bis 110°C aufweist, beispielsweise durch tert.-Butylperoxyacetat. Bei derart geringen Mengen an bei hohen Temperaturen zerfallenden Peroxiden weist das bei der Polymerisation entstehende EPS aber einen relativ hohen Reststyrolgehalt auf, der bei den Beispielen der JP-A 61 171705 jeweils 1000 ppm oder mehr beträgt.

Bei der erfindungsgemäßen Suspensionspolymerisation wird als Monomer bevorzugt Styrol allein eingesetzt. Es kann jedoch zu bis zu 20 % seines Gewichts durch andere ethylenisch ungesättigte Monomere, wie Alkylstyrole, Divinylbenzol, Acrylnitril, 1,1-Diphenylether oder α-Methylstyrol ersetzt sein.

Bei der Suspensionspolymerisation können die üblichen Hilfsmittel, wie z. B. Suspensionsstabilisatoren, Treibmittel, Kettenüberträger, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphenylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Monomer zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z. B. Magnesiumpyrophosphat oder Calciumphosphat einzusetzen.

Erfindungsgemäß wird die Suspensionspolymerisation in Gegenwart von mindestens zwei bei verschiedenen Temperaturen zerfallenden Peroxiden durchgeführt. Das bei der niedrigeren Temperatur zerfallende Peroxid A sollte eine Halbwertszeit von 1 Stunde bei 80°C bis 100°C, vorzugsweise von 85°C bis 95°C aufweisen; das bei der höheren Temperatur zerfallende Peroxid B sollte eine Halbwertszeit von 1 Stunde bei 110°C bis 150°C, vorzugsweise bei 120 bis 135°C aufweisen.

Die Suspensionspolymerisation wird zweckmäßigerweise - wie in der EP-A 405 324 beschrieben - in zwei Temperaturstufen durchgeführt. Dabei wird zunächst die Suspension innerhalb von etwa 2 Stunden auf 80°C bis 90°C erhitzt, wobei das Peroxid A zerfällt und die Polymerisation einleitet. Danach läßt man die Reaktionstemperatur, vorzugsweise um 8 bis 17°C pro Stunde, ansteigen bis auf 100 bis 130°C und hält bei dieser Temperatur so lange, bis der Restmonomerengehalt auf weniger als 1000 ppm abgesunken ist. Bei dieser Temperatur zerfällt das Peroxid B. Mit dieser Verfahrensweise ist man in der Lage, EPS mit geringen Restmonomergehalten zu erzeugen.

Das Peroxid A ist erfindungsgemäß ein multifunktionelles, vorzugsweise ein bifunktionelles Peroxid. Besonders bevorzugt ist 2,5-Bis(2-ethylhexanoylperoxy)-2,5-dimethylhexan (TRIGONOX 141 der Firma Akzo) mit einer Halbwertszeit von 1 Stunde bei 86°C. Daneben ist auch 1,1-Bis(tert.butylperoxy)-3,3,5-trimethylcyclohexan (TRIGONOX 29) geeignet. Das Peroxid A wird, bezogen auf 1 Mol Monomer, bevorzugt in Mengen von 0,01 bis 0,2 Mol %, insbesondere von 0,03 bis 0,15 Mol % eingesetzt.

Als Peroxid B können grundsätzlich alle üblichen, bei den genannten hohen Temperaturen zerfallenden Peroxide eingesetzt werden. Bevorzugt sind jedoch solche, die frei von Benzoylgruppen sind, wenn das erhaltene EP benzolfrei sein soll. Bevorzugte Peroxide B sind daher Dicumylperoxid, mit einer Halbwertszeit von 1 Stunde bei 132°C sowie die aliphatischen oder cycloaliphatischen Perketale oder Monoperoxycarbonate, die in der EP-A 574 665 aufgeführt sind, und tert.-Butylperoxyacetat.

Das Peroxid B wird, bezogen auf Monomer, bevorzugt in Mengen von 0,10 bis 0,5 Mol %, insbesondere von 0,16 bis 0,30 Mol %, eingesetzt. Das Molverhältnis der Peroxide B:A bzw. B:(A+A') sollte größer als 40:60, vorzugsweise größer als 50:50 sein.

Bei einer besonderen Ausführungsform der Erfindung ist ein Teil, vorzugsweise 20 bis 80 Mol % und insbesondere 30 bis 70 Mol % des bei der niedrigeren Temperatur zerfallenden, multifunktionellen Peroxids A durch ein herkömmliches monofunktionelles Peroxid A' ersetzt. Bevorzugtes Peroxid A' ist Dibenzoylperoxid mit einer Halbwertszeit von 1 Stunde bei 91°C; daneben sind auch tert.-Butylperoxy-2-ethylhexanoat, tert. Amylperoxy-2-ethylhexanoat und Dilaurylperoxid geeignet.

Die Kombination von mono- und multifunktionellen Peroxiden, die beide im niedrigen Temperaturbereich zerfallen, führt zur Bildung von Polymeren mit bimodaler Molekulargewichtsverteilung. EPS auf Basis solcher Polymere hat einerseits eine gute Expandierbarkeit auch bei relativ geringem Treibmittelgehalt (was aus Umweltschutzgründen erwünscht ist), andererseits bewirkt der hochmolekulare Anteil, daß die Produkteigenschaften daraus hergestellter Schaumstoffe ausreichend gut sind. Durch Variation der Mengen an Peroxid A und A' lassen sich Molekulargewichtsverteilung und damit die genannten Eigenschaften gezielt einstellen.

Bei der Suspensionspolymerisation entstehen perlförmige, im wesentlichen runde Teilchen mit einem mittleren Durchmesser im Bereich von 0,2 bis 2 mm. Sie können mit den üblichen Beschichtungsmitteln, z. B. Metallstearaten, Glycerinestern und feinteiligen Silicaten beschichtet werden.

Die EPS-Partikel können zu Polystyrolschaumstoffen mit Dichten von 5 bis 100 g/l bevorzugt von 10 bis 50 g/l, verarbeitet werden. Hierzu werden die expandierbaren Partikel vorgeschäumt. Dies geschieht zumeist durch Erwärmen der Partikel mit Wasserdampf in sogenannten Vorschäumern. Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

### Beispiel 1 (Vergleich)

Zu 429 kg Styrol werden 0,81 kg Dibenzoylperoxid und 2,1 kg Dicumylperoxid gegeben. Die organische Phase wird in 491 l vollensalztes Wasser in einem druckfesten 1 m³ Rührkessel eingebracht. Die wäßrige Phase enthält 1,19 kg Natriumpyrophosphat und 2,38 kg Bittersalz. Das Reaktionsgemisch wird unter Rühren innerhalb von 2 Stunden auf 90°C erhitzt. Anschließend wird innerhalb von 4 Stunden auf 132°C hochgeheizt, wobei nach 1,5 Stunden 5,8 kg Emulgator K 30/40 (Bayer AG) und nach circa 2,5 Stunden 30 kg Pentan zugegeben werden. Schließlich wird bei einer Temperatur von 132°C für weitere 4 Stunden auspolymerisiert. Man erhält ein perlförmiges Granulat dessen Reststyrolgehalt unter 1000 ppm liegt. Das mittlere Molekulargewicht M_{w} liegt bei 230 000 g/mol.

### Beispiel 2:

zu 429 kg Styrol werden 2,16 kg (0,12 Mol %) 2,5-Bis(2-ethylhexanylperoxy)-2,5-dimethylhexan und 2,1 kg (0,19 Mol %) Dicumylperoxid gegeben. Die organische Phase wird in 491 l vollensalztes Wasser in einem druckfesten 1 m³ Rührkessel eingebracht. Die wäßrige Phase enthält 1,19 kg Natriumpyrophosphat und 2,38 Bittersalz. Das Reaktionsgemisch wird unter Rühren innerhalb von 4 Stunden auf 132°C hochgeheizt, wobei nach 2,5 Stunden 5,8 kg Emulgator K 30/40 (Bayer AG) und nach circa 3,5 Stunden 30 kg Pentan zugegeben werden. Schließlich wird bei einer Temperatur von 132°C für weitere 4 Stunden auspolymerisiert. Man erhält ein perlförmiges Granulat dessen Reststyrolgehalt unter 1000 ppm liegt. Das mittlere Molekulargewicht M_{w} liegt bei 230000 g/mol. Der Polymerisationszyklus konnte gegenüber dem Beispiel 1 um 2 Stunden verkürzt werden.

### Beispiel 3:

zu 429 kg Styrol werden 0,4 kg Dibenzoylperoxid (0,04 Mol %), 0,4 kg 2,5-Bis(2-ethylhexanoylperoxy)-2,5-dimethylhexan (0,02 Mol %) und 2,1 kg Dicumylperoxid (0,19 Mol %) gegeben. Die organische Phase wird in 491 l vollensalztes Wasser in einem druckfesten 1 m³ Rührkessel eingebracht. Die wäßrige Phase enthält 1,19 kg Natriumphyrophosphat und 2,38 kg Bittersalz. Das Reaktionsgemisch wird unter Rühren innerhalb von 2 Stunden auf 90°C erhitzt. Anschließend wird innerhalb von 4 Stunden auf 132°C hochgeheizt, wobei nach 1,5 Stunden 5,8 kg Emulgator K 30/40 (Bayer AG) und nach circa 2,5 Stunden 30 kg Pentan zugegeben werden. Schließlich wird bei einer Temperatur von 132°C für weitere 4 Stunden auspolymerisiert. Man erhält ein perlförmiges Granultat dessen Reststyrolgehalt unter 1000 ppm liegt.

## Patentansprüche

1. Verfahren zur Herstellung von expandierbaren Styrolpolymerisaten (EPS), bei dem man Styrol, gegebenenfalls zusammen mit bis zu 20 % seines Gewichts an Comonomeren, in wäßriger Suspension in Gegenwart von mindestens zwei, bei verschiedenen Temperaturen zerfallenden organischen Peroxiden A und B polymerisiert, wobei das Peroxid A eine Halbwertszeit von 1 Stunde bei 80°C bis 100°C, und das Peroxid B eine Halbwertszeit von 1 Stunde bei 110°C bis 150°C aufweist, dadurch gekennzeichnet, daß das bei niedrigerer Temperatur zerfallende Peroxid A multifunktionell ist und beim Zerfall zwei oder mehr zusammenhängende Polymerketten startet, und daß das Molverhältnis der Peroxide B:A größer als 40:60 ist.

2. Verfahren zur Herstellung von EPS nach Anspruch 1, dadurch gekennzeichnet, daß das Peroxid A 2,5-Bis(2-ethylhexanoylperoxy)-2,5-dimethylhexan ist.

3. Verfahren zur Herstellung von EPS nach Anspruch 1, dadurch gekennzeichnet, daß ein Teil des bei der niedrigeren Temperatur zerfallenden, multifunktionellen Peroxids A durch ein monofunktionelles Peroxid A' ersetzt ist, welches beim Zerfall nur eine Polymerkette bildet.

4. Verfahren zur Herstellung von EPS nach Anspruch 1, dadurch gekennzeichnet, daß das Peroxid B frei von Benzoylgruppen ist.

5. Verfahren zur Herstellung von EPS nach Anspruch 4, dadurch gekennzeichnet, daß das Peroxid B Dicumylperoxid ist.

6. Verfahren zur Herstellung von EPS nach Anspruch 1, dadurch gekennzeichnet, daß, bezogen Monomer,0,01 bis 0,20 Mol % Peroxid A und 0,10 bis 0,5 Mol % Peroxid B eingesetzt werden.

7. Verfahren zur Herstellung von EPS nach Anspruch 3, dadurch gekennzeichnet, daß 20 bis 80 Mol % des Peroxids A durch das monofunktionelle Peroxid A' ersetzt sind.
